Europäisches Patentamt

European Patent Office

Office européen des brevets

(11) Publication number : **0 495 588 A2**

(12) # EUROPEAN PATENT APPLICATION

(21) Application number : **92300208.3**

(22) Date of filing : **10.01.92**

(51) Int. Cl.⁵ : **B23K 35/32, H01K 3/00**

(30) Priority : **15.01.91 HU 10191**

(43) Date of publication of application :
**22.07.92 Bulletin 92/30**

(84) Designated Contracting States :
**BE DE ES FR GB IT NL**

(71) Applicant : **TUNGSRAM Részvénytársaság**
**Váci ut. 77**
**H-1340 Budapest IV (HU)**

(72) Inventor : **Busai, Gyula**
**Lahner Gy. utca 12**
**H-1046 Budapest (HU)**
Inventor : **Nagy, János**
**Goldmark K. utca 16**
**H-1022 Budapest (HU)**

(74) Representative : **Gold, Tibor Zoltán et al**
**Stephenson Harwood One, St. Paul's**
**Churchyard**
**London EC4M 8SH (GB)**

(54) **Welding auxiliary material.**

(57)    The invention provides a welding auxiliary
material for producing welded joints between
refractory metal parts of high-wattage electric
light sources. According to the invention, the
welding auxiliary material (1) has a porous-
structure surface layer (1a) sintered from a
refractory metal powder having a melting point
above 2000°C.

Fig. 2

EP 0 495 588 A2

The invention relates to a welding auxiliary material for welding refractory metal parts of high-intensity electric light sources.

When manufacturing halogen lamps, the joints between refractory metal parts, for example of tungsten or molybdenum, are welded joints, as reliability is an indispensable requirement.

Refractory metal parts of low-wattage halogen lamps with "standard" i.e. not long or extended life, are welded directly together, if no special requirement exists. This, however, does not ensure a satisfactory joint in every case. Hungarian Patent No.185,198 discloses a molybdenum lead-in foil for elimination of unsatisfactory features. The surface of the foil is provided with a thin electroplated rhenium layer. Such a lead-in foil has better weldability properties than simple uncoated foil. A foil prepared in that way is useful in the manufacture of halogen lamps with low current loads and "standard" lives, for joining refractory metal parts, and meets the requirements for reliable operation on that field, but not in the case of halogen lamps with extended or long lives and heavy current loads.

This is explained by the fact that only a low-thickness rhenium layer can be applied to the surface of the lead-in foil. This has the consequence that, during the welding operation, a lead-in wire is unable to get embedded into the thin rhenium layer applied to the lead-in foil and therefore, a small-surface weld will be produced. In the case of high-wattage halogen lamps, the current flow - due to the high current density - generates a substantial amount of thermal load resulting in the easy destruction of the joint and in shortened lamp life.

Satisfactory functioning of halogen lamps with high current loads and lives of several thousand hours can only be ensured if higher requirements for joining the refractory metal parts and for the bond produced in welding are met.

In some types of lamps with high current loads as well as long lives, a separate platinum welding auxiliary material is placed between the basic metal foil and the current lead-in wire in order to produce a welded joint of satisfactory quality.

In this case, platinum will melt during welding and form a molybdenum-platinum alloy phase with a portion of the molybdenum material of the foil. This adversely affects the strength at high temperatures of the molybdenum foil which can result in a decrease in thickness, and in cracks and tear in the foil.

Another disadvantage is that, after melting at the temperature necessary for pinch-sealing the lamp, liquid and/or vapour phase platinum can enter the inner space of the lamp where, on reaching the tungsten filament, a lower-melting platinum tungsten alloy will be formed. This has the possible consequences of local filament fusing and arcing that result in early lamp failure.

It may also be considered a disadvantage that the melt creeps on the current lead-in wire during welding, with the consequent that no gas-tight seal will be achieved in some cases.

The so-called "brazed joint" has a further disadvantage that, in lamp operation, it gets alloyed gradually into the basic metals as a result of the local thermal load during operation. This "loss" of the initial bond causes the cross-section available for current conduction to decrease and the local thermal load to increase, resulting in a further "loss" and a rapid deterioration of the joint.

It is also a common practice to use a platinum coated welding auxiliary material for welding refractory metal parts together. This method suffers from the disadvantages described earlier in the discussion of platinum welding auxiliary material.

According to the U.S.Patent No.4,823,048, a joint is produced by spot-welding an inner current lead-in wire and a metal foil together and a welding auxiliary foil is connected, also by means of welding, to this joint. The filler metal foil increases the surface area available for current conduction and thereby reduces the current density. One end of the filler metal foil is connected to a large-surface portion of the metal foil opposite to the inner current lead-in wire and its other end is connected to the inner current lead-in wire.

The joint according to this U.S.Patent has the disadvantage of being complicated to produce, and also it does not solve the problems described earlier related to the cross-section reduction or tear of the current lead-in foil.

The object of the present invention is therefore to provide a welding auxiliary material enabling the inner and outer current lead-in wires of high-wattage electric light sources to be joined with the current lead-in foil in a simple and rapid and reliable manner, without damage to the parts during welding and the subsequent pinch-sealing process.

Another object is to provide means for forming a joint, which is reliable even in the case of heavy current conduction over the time of operation.

In the invention, a welding auxiliary material of unique structure and suitable thickness is prepared by sintering refractory metal powder.

According to the invention, a welding auxiliary material for producing welded joints between refractory metal parts of high-wattage electric light sources is formed with a porous-structure surface layer sintered from a refractory metal powder having a melting point of about 2000°C.

In the welding auxiliary material according to the invention, the material of the refractory metal powder may be molybdenum and/or rhenium.

In a preferred embodiment, the surface layer is sintered on a refractory metal substrate, which substrate comprises a molybdenum foil. Advantageously, the surface layer pores are impregnated with an additive that promotes welding. In a preferred embodiment, ethanol or another alcohol derivative is used for the additive.

The welding auxiliary material described below has several favourable properties. Due to the porous-structure surface layer, the outer surface of the welding auxiliary material including the side for facing the molybdenum current lead-in foil, is rough.

During the welding operation, the relatively rough surface will make many point-like contacts having a high contact resistance with the foil and, as a result of the intensive local heat generation the welding auxiliary material will melt and produce microweld spots resulting in a large-surface welded zone.

Due to the intensive local heat generation, the time needed for welding can be shortened and this has the consequence that no recrystallisation process will occur preventing the current lead-in parts from becoming brittle.

It is also an advantage that the method of sintering enables a thicker surface layer to be formed so that the current lead-in wires may be embedded deeper into this thicker surface layer, which increases the cross-section available for conduction. Such increased cross-section results in improved current conduction properties and lower specific heat load, and this leads to the prolongation of life.

It is also a significant advantage of the present invention that - due to the thicker surface layer - the material surrounding the weld neither will become overly thin nor will be distorted since the welding auxiliary material is thick enough to have satisfactory amount of material for producing the joint.

The strength properties at high temperatures of rhenium-molybdenum and rhenium-tungsten alloys formed by welding, when the rhenium-containing welding auxiliary material is used, are more favourable than those of the component metals and these alloys melt high above the temperature used during the pinch-sealing process. Due to this fact, the undesired effects unavoidable when a platinum metal sheet is used, will not occur. When the welding auxiliary material according to the invention is used, the alloy phase does not creep on the current lead-in wires and does not melt during pinch-sealing. Therefore, a gas-tight seal can be produced more safely than in the case of other known methods.

A further advantage of the welding auxiliary material according to the invention is that the pores can be filled with an additive promoting the welding process and, due to this, the welding auxiliary material is able by itself to provide a protective atmosphere during welding. This solution not only improves the quality of the welded joint, but also reduces the expense of the welding operation by making some of the machine accessories, that have been indispensable so far, unnecessary.

The invention will be further described by way of example with reference to the accompanying drawings, in which:

Figure 1 is a preferred embodiment of the welding auxiliary material according to the invention,

Figure 2 is a cross-section through another preferred embodiment,

Figure 3 is a view of a welded joint produced using the welding auxiliary material according to the invention, and

Figure 4 is a sectional view along the line IV-IV of Figure 3.

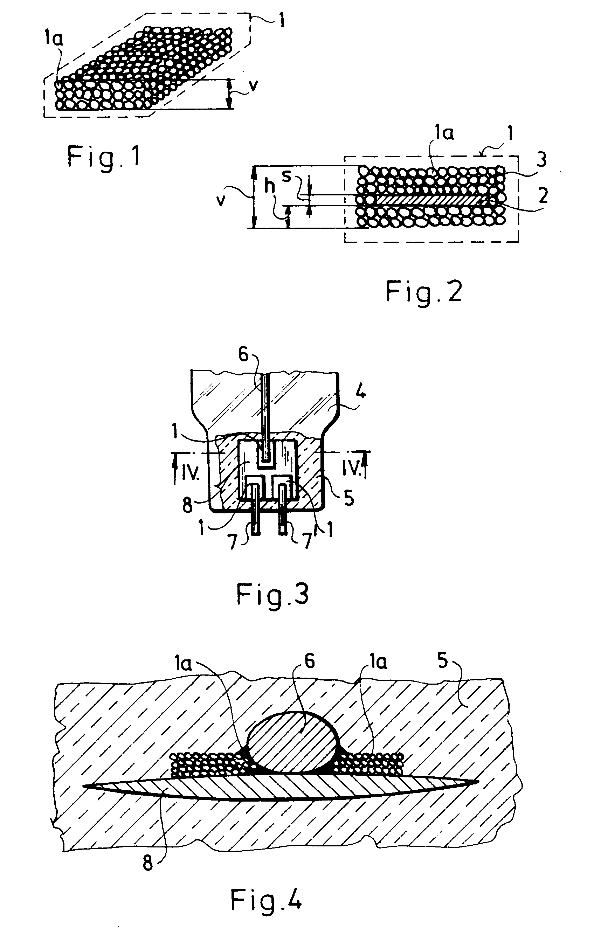

In Figure 1, an embodiment of a welding auxiliary material according to the invention is shown, the entire cross-section of which is prepared from molybdenum metal powder having a melting point above 2000°C using sintering. The welding auxiliary material 2, also including its surface layer 1a, has a porous structure and consists of molybdenum grains ground to grain sizes below 10 microns. A thickness "v" of the welding auxiliary material 1 is 50 microns in this example, but it may vary depending on the field of application.

In Figure 2, a cross-section through another embodiment is shown, in which the surface layer 1a of the welding auxiliary material 1 is sintered on a refractory, preferably molybdenum, metal substrate 2 having a sheet thickness "s" of 20 microns.

Use of the metal substrate 2 is recommended in order to facilitate the handling of the welding auxiliary material 1. The thickness "v" of the welding auxiliary material 1 is 60 microns in this embodiment, from which one can calculate the constructional thickness "h" of the surface layer 1a which is preferable in respect of producing the welded joint, but the constructional thickness "h" of the surface layer 1a may vary from 10 microns up to 50 microns.

The pores of the surface layer 1a of the welding auxiliary material 1 in this embodiment are filled with an additive 3, preferably consisting of ethanol, although other alcohol derivatives can also be used. The additive 3, evaporating with the heat generated during welding, forms a protective atmosphere further improving the quality of the weld.

In this embodiment, the surface layer 1a is prepared from a mixture of rhenium and molybdenum metal powders, instead of from molybdenum powder alone. The proportion of rhenium to molybdenum may range between rather different values, the properties of the joint produced being improved by a welding auxiliary material 1 with as low as 5 to 10% rhenium content.

To give an example, the welding auxiliary material 1 may be prepared as follows. The molybdenum foil metal substrate 2, with a sheet thickness "h" of 20 microns, is coated with a mixture of rhenium and molybdenum metal powders ground to 1 micron grain size and suspended in alcohol. The proportion of rhenium to molybdenum is 2:1 in the mixture. This is followed by a sintering process performed in a hydrogen-flushed tungsten-tube furnace at 2200°C for 5 minutes. After this, the welding auxiliary material 1 described above and having the surface layer 1a with the porous structure is produced.

Figures 3 and 4 show an example for the use of the welding auxiliary material 1. A current lead-in foil 8 and outer current lead-in wires 7 and 7' as well as an inner current lead-in wire 6 welded to it, are placed in a pinch-sealed portion 5 of a bulb 4. The welding auxiliary material 1, being between the current lead-in foil 8 and the inner current lead-in wire 6, as well as between the current lead-in wires 7 and 7' and the current lead-in foil 8, is found only in the environment of the welded spot. The current lead-in foil 8 is made of molybdenum and the inner current lead-in wire 6 is made of tungsten or molybdenum as is known and commonly used in light source manufacture.

Figure 4 shows clearly how the inner current lead-in wire 6 is connected to the current lead-in foil 8 fixed in the pinch-sealed portion 5.

The surface layer 1a, which becomes molten due to the effect of heat during welding, surrounds the inner current lead-in wire 6 over substantial surface ara, and hence the joint provides better conditions for current conduction than do the known arrangements.

The welding auxiliary material 1 can be successfully used for welding together the parts located in pinch-sealed portions of electric light sources. Due to its favourable properties, such as resistance to reactive environments, it can also be used for joining parts inside the bulb of mercury and metal halide lamps.

## Claims

1. A welding auxiliary material for welding refractory metal parts of high-intensity electric light sources, characterised in that the welding auxiliary material (1) has a porous surface layer (1a) sintered from refractory metal powder having a melting point above 2000°C.

2. A welding auxiliary material according to claim 1, characterised in that the refractory metal powder is made of molybdenum and/or rhenium.

3. A welding auxiliary material according to claim 1 or 2, characterised in that the surface layer (1a) is sintered on a refractory metal substrate (2).

4. A welding auxiliary material according to claim 3, characterised in that the metal substrate (2) comprises a molybdenum foil.

5. A welding auxiliary material according to any of claims 1 to 4, characterised in that the pores of the surface layer (1a) are impregnated with an additive (3) that promotes welding.

6. A welding auxiliary material according to claim 5, characterised in that the additive (3) comprises ethanol or another alcohol derivative.

7. A method of producing a welding auxiliary material for welding refractory metal parts of high intensity electric light sources, characterised by sintering a refractory metal powder having a melting point above 2000°C to form a welding auxiliary material (1) having a porous surface layer (1a).

8. A method according to claim 7, characterised by sintering the refractory metal powder on a refractory metal substrate (2).

9. A method according to claim 7 or 8, characterised by impregnating the pores of the surface layer with an additive that promotes welding.

Fig.1

Fig.2

Fig.3

Fig.4